# EUROPÄISCHE PATENTSCHRIFT

(11) **EP 2 984 442 B1**
(45) Veröffentlichungstag und Bekanntmachung des Hinweises auf die Patenterteilung: **08.03.2017**
(21) Anmeldenummer: 13713453.2
(22) Anmeldetag: 02.04.2013
(51) Int. Cl.: G01B 21/04, G01B 5/008

(54) **VERFAHREN ZUM BESTIMMEN EINER FORMKONTUR AN EINEM MESSOBJEKT**
METHOD FOR DETERMINING A SHAPE CONTOUR ON AN OBJECT TO BE MEASURED
PROCÉDÉ PERMETTANT DE DÉTERMINER UN CONTOUR D'UN OBJET À MESURER

(43) Veröffentlichungstag der Anmeldung: 17.02.2016
(73) Patentinhaber: Carl Zeiss Industrielle Messtechnik GmbH, 73447 Oberkochen (DE)
(72) Erfinder: BERNHARDT, Ralf, 73432 Aalen (DE); SAGEMUELLER, Rainer, 73434 Aalen (DE); SEITZ, Dominik, 73525 Schwäbisch Gmünd (DE)
(74) Vertreter: Witte, Weller & Partner Patentanwälte mbB
(86) Internationale Anmeldenummer: PCT/EP2013/056953
(87) Internationale Veröffentlichungsnummer: WO 2014/161568

(56) Entgegenhaltungen:
- EP-A1- 1 862 761
- WO-A1-2013/110337
- CN-Y- 201 059 953
- DE-A1-102008 058 198
- US-A1- 2004 163 268

## Beschreibung

Die vorliegende Erfindung betrifft ein Verfahren zum Bestimmen einer Formkontur an einem Messobjekt, mit den Schritten:
- Bereitstellen eines Koordinatenmessgerätes mit einer Werkstückaufnahme, mit einem Messkopf mit einem Messelement und mit einem Gestell, an dem der Messkopf angeordnet ist, wobei das Gestell ein erstes Gestellteil aufweist, das relativ zu der Werkstückaufnahme entlang einer ersten Bewegungsachse bewegbar ist, wobei das Gestell ein zweites Gestellteil aufweist, das relativ zu der Werkstückaufnahme entlang einer zweiten Bewegungsachse bewegbar ist, und wobei das Gestell ein drittes Gestellteil aufweist, das relativ zu der Werkstückaufnahme entlang einer dritten Bewegungsachse bewegbar ist, und wobei die Werkstückaufnahme einen Drehtisch aufweist, der um eine weitere Achse drehbar ist,
- Anordnen des Messobjekts auf dem Drehtisch und Positionieren des Messelements an einer definierten Position entlang der ersten, zweiten und dritten Bewegungsachse,
- Bewegen des Drehtisches, während der Messkopf mit Hilfe des Messelements aktuelle Messwerte aufnimmt, die räumliche Positionen von Messpunkten an dem Messobjekt relativ zu dem Messkopf repräsentieren, und
- Bestimmen der Formkontur in Abhängigkeit von den Messwerten.

Die Erfindung betrifft ferner ein Koordinatenmessgerät zum Bestimmen einer Formkontur an einem Messobjekt, mit einer Werkstückaufnahme, mit einem Messkopf mit einem Messelement, mit einem Gestell, an dem der Messkopf angeordnet ist, und mit einer Auswerte- und Steuereinheit, wobei das Gestell ein erstes Gestellteil aufweist, das relativ zu der Werkstückaufnahme entlang einer ersten Bewegungsachse bewegbar ist, wobei das Gestell ein zweites Gestellteil aufweist, das relativ zu der Werkstückaufnahme entlang einer zweiten Bewegungsachse bewegbar ist, und wobei das Gestell ein drittes Gestellteil aufweist, das relativ zu der Werkstückaufnahme entlang einer dritten Bewegungsachse bewegbar ist, wobei die Werkstückaufnahme einen Drehtisch aufweist, der um eine weitere Achse drehbar ist, wobei die Auswerte- und Steuereinheit dazu ausgebildet ist, den Messkopf an einer definierten Position entlang der ersten, zweiten und dritten Bewegungsachse zu positionieren und den Drehtisch zu drehen, während der Messkopf mit Hilfe des Messelements aktuelle Messwerte aufnimmt, die räumliche Positionen von Messpunkten an dem Messobjekt relativ zu dem Messkopf repräsentieren, und wobei die Auswerte- und Steuereinheit ferner dazu ausgebildet ist, die Formkontur in Abhängigkeit von den Messwerten zu bestimmen.

Ein solches Verfahren und ein entsprechendes Koordinatenmessgerät sind aus DE 10 2008 058 198 A1 bekannt.

Koordinatenmessgeräte sind vielseitige Messgeräte, die vor allem in der industriellen Fertigungsmesstechnik eingesetzt werden. Sie besitzen üblicherweise einen Messkopf, der relativ zu einer Werkstückaufnahme innerhalb eines Messvolumens bewegt werden kann. Das Messvolumen wird von den Bewegungsachsen aufgespannt, entlang derer sich der Messkopf relativ zu der Werkstückaufnahme bewegen kann. Zur Messung wird der Messkopf in eine definierte Position relativ zu verschiedenen ausgewählten Messpunkten gebracht. Anschließend können aus der Position des Messkopfes innerhalb des Messvolumens und aus der Position des Messkopfes relativ zu den ausgewählten Messpunkten Raumkoordinaten für jeden ausgewählten Messpunkt bestimmt werden. Die Raumkoordinaten definieren die Lage des Messpunktes innerhalb des Messvolumens. Bestimmt man die Raumkoordinaten für eine Vielzahl von Messpunkten, kann man anhand der Raumkoordinaten geometrische Abmessungen an dem Messobjekt bestimmen.

Ursprünglich wurden Koordinatenmessgeräte vor allem für sogenannte Einzelpunktantastungen verwendet. Der Messkopf besitzt dazu einen Taststift mit einem freien Ende, das mit dem ausgewählten Messpunkt in Kontakt gebracht wird. Einfache Messköpfe können lediglich ein Schaltsignal auslösen, das den Kontakt mit dem ausgewählten Messpunkt signalisiert. Sogenannte messende Messköpfe können darüber hinaus eine Auslenkung des Taststiftes relativ zu dem Messkopf beim Antasten bestimmen. Mit messenden Messköpfen ist es möglich, die Kontur eines Werkstücks in einem sogenannten scannenden Modus entlangzufahren, um auf diese Weise eine Vielzahl von Messwerten und infolgedessen eine Vielzahl von Raumkoordinaten für eine Vielzahl von Messpunkten entlang der Kontur zu bestimmen.

Darüber hinaus gibt es heutzutage auch verschiedene berührungslose Messköpfe für Koordinatenmessgeräte. Beispielhaft seien Messköpfe mit kapazitiven Sensoren oder Messköpfe genannt, die mittels einer Lasertriangulation, einer Laserinterferometrie oder mithilfe von Fokusmessverfahren optisch einen Abstand zwischen dem Messkopf und ausgewählten Messpunkten an dem Messobjekt bestimmen.

Für hochpräzise Formmessungen, wie etwa die Rundheitsmessung an Rotationskörpern, werden bis heute in der Regel spezielle Formmessgeräte verwendet. Diese sind wesentlich weniger flexibel als klassische Koordinatenmessgeräte. Sie sind zulasten der Flexibilität für die gewünschte Formmessung an bestimmten Messobjekten optimiert.

Beispielsweise offenbart DE 195 22 276 C1 ein Formmessgerät zum Messen kegeliger Außengewinde. Das Messobjekt mit dem kegeligen Außengewinde wird auf einem Schlitten drehbar zwischen zwei Spitzen eingespannt. Anschließend wird der Schlitten so ausgerichtet, dass die Achse des Außengewindes und die Messachse eines in genauer einer Koordinatenrichtung bewegbaren Tasters orthogonal zueinander liegen. Mithilfe von Messdrähten, die in einander gegenüberliegende Gewindelücken eingelegt und mit dem Taster angetastet werden, lassen sich Messwerte aufnehmen, aus denen der Flankendurchmesser und der Kegelwinkel des Messobjekts bestimmt werden. Nach der Ausrichtung des Messobjekts kann der Schlitten arretiert werden.

Die eingangs genannte DE 10 2008 058 198 A1 beschreibt ein vielseitiges Koordinatenmessgerät in Portalbauweise. Der Messkopf ist am unteren Ende einer Pinole angeordnet, die in Vertikalrichtung verfahren werden kann. Die Pinole ist an einem Schlitten angeordnet, der in einer ersten Horizontalrichtung verfahren werden kann. Der Schlitten ist an einem Portal angeordnet, das in einer zweiten Horizontalrichtung verfahren werden kann. Das Portal ist auf einer Basis angeordnet, auf der eine Werkstückaufnahme in Form eines Drehtisches angeordnet ist. Der Drehtisch macht es möglich, ein Messobjekt relativ zu dem Messkopf zu drehen. Prinzipiell ist damit eine Formmessung möglich. Beispielsweise kann ein rotationssymmetrisches Messobjekt mit dem Drehtisch gedreht werden, während der Messkopf den Außenumfang des Messobjekts abtastet.

Die Messgenauigkeit einer solchen Formmessung ist jedoch im Vergleich zu speziellen Form- bzw. Rundheitsmessgeräten begrenzt, obwohl DE 10 2008 058 198 A1 unter anderem vorschlägt, die Neigung des Drehtisches relativ zu der Basis infolge einer exzentrischen Belastung zu bestimmen und einen daraus resultierenden Taumelfehler zu korrigieren. Trotz dieser Korrektur besteht der Wunsch, die Messgenauigkeit eines solchen Koordinatenmessgerätes mit Drehtisch bei Formmessungen weiter zu steigern.

CN 201059953 Y offenbart ein manuell betätigtes Koordinatenmessgerät in Portalbauweise, bei dem der Bediener im Bereich des Messkopfes ein Tastenfeld hat, mit dem er die Luftzufuhr in die Luftlager der einzelnen Achsen gezielt aktivieren oder deaktivieren kann. Damit ist es möglich, einzelne Bewegungsachsen des Koordinatenmessgerätes zu blockieren.

Des Weiteren ist es aus EP 0 701 663 B1 oder DE 10 2011 112 734 A1 bekannt, die Luftlager eines Koordinatenmessgerätes zu deaktivieren, wenn das Koordinatenmessgerät eine gewisse Zeit steht, um auf diese Weise Energie zu sparen. DE 10 2010 006 297 A1 schlägt in einem solchen Fall vor, den Lageregler auch bei deaktivierten Luftlagern in Betrieb zu halten, um Initialisierungsmaßnahmen bei der Wiederaufnahme des Betriebs zu minimieren.

Aus DE 196 23 601 A1 oder aus EP 1 862 761 B1 ist es bekannt, den Taststift eines taktilen Messkopfes in ein oder zwei Koordinatenrichtungen zu blockieren, um eine Auslenkung des Taststiftes nur in der oder den verbleibenden Koordinatenrichtungen zu ermöglichen.

Aus EP 0 402 440 B1 ist es bekannt, die Oberfläche eines Messobjekts mit einem Taststift kontinuierlich abzutasten, während der Messkopf stationär steht. Der Messkopf besitzt in diesem Fall ein zweiachsiges Dreh-Schwenk-Gelenk, mit dessen Hilfe der Taststift relativ zu dem Messkopf um zwei orthogonale Achsen gedreht werden kann.

US 2004/163268 A1 offenbart ein Koordinatenmessgerät ohne Drehtisch, bei dem die Lagerung eines Tastelements im Messkopf ein schaltbares Luftlager aufweist.

In der nachveröffentlichten WO 2013/110337 A1 ist ferner ein Koordinatenmessgerät in Portalbauweise zur Vermessung von geometrischen Abmessungen oder der Raumform eines Messobjekts beschrieben.

Vor diesem Hintergrund ist es eine Aufgabe der vorliegenden Erfindung, ein Verfahren und ein Koordinatenmessgerät der eingangs genannten Art anzugeben, die eine höhere Messgenauigkeit bei der Formmessung an - insbesondere rotationssymmetrischen - Messobjekten ermöglichen. Es ist ferner eine Aufgabe, die höhere Messgenauigkeit ohne Einbußen in Bezug auf die Vielseitigkeit des eingangs genannten Koordinatenmessgerätes zu ermöglichen.

Gemäß einem ersten Aspekt der Erfindung wird diese Aufgabe durch ein Verfahren der eingangs genannten Art gelöst, wobei das Messelement über zumindest ein Hydrolager, insbesondere ein Luftlager, gelagert ist, um eine Bewegung des Messelements relativ zu der Werkstückaufnahme zu ermöglichen, und wobei das zumindest eine Hydrolager innerhalb eines automatisierten Messablaufs deaktiviert wird, nachdem der Messkopf an der definierten Position positioniert wurde, so dass während der Aufnahme der aktuellen Messwerte das zumindest eine Hydrolager deaktiviert ist.

Gemäß einem weiteren Aspekt wird diese Aufgabe durch ein Koordinatenmessgerät der eingangs genannten Art gelöst, wobei das Messelement über zumindest ein Hydrolager, insbesondere ein Luftlager, gelagert ist, um eine Bewegung des Messelements relativ zu der Werkstückaufnahme zu ermöglichen, und wobei die Auswerte- und Steuereinheit außerdem dazu ausgebildet ist, das zumindest eine Hydrolager innerhalb eines automatisierten Messablaufs zu deaktivieren, nachdem der Messkopf an der definierten Position positioniert wurde, so dass während der Aufnahme der aktuellen Messwerte das zumindest eine Hydrolager deaktiviert ist.

Das neue Verfahren und das entsprechende Koordinatenmessgerät basieren auf der Erkenntnis, dass die in vielerlei Hinsicht vorteilhaften Hydrolager, mit denen die Gestellteile und/oder die Messköpfe moderner Koordinatenmessgeräte ausgestattet sind, Schwingungen des Messelements während einer Konturmessung mithilfe des Drehtisches begünstigen. Die Schwingungen führen zu einer signifikanten Erhöhung des Rauschanteils im Messsignal und damit zu einer begrenzten Genauigkeit, da die einzelnen Messwerte jeweils mit einem unbekannten statistischen Fehler überlagert sind. Das temporäre Deaktivieren der Hydrolager während der Aufnahme der Messwerte trägt dazu bei, die Schwingungen bei der Aufnahme der Messwerte spürbar zu reduzieren. Die Steifigkeit des Gestells und des Messelements kann während der Formmessung auf einfache Weise erhöht werden. Infolgedessen ermöglichen das neue Verfahren und das entsprechende Koordinatenmessgerät eine höhere Messgenauigkeit beim Scannen einer Formkontur an einem Messobjekt, das mithilfe des Drehtisches relativ zu dem Messkopf gedreht wird.

Darüber hinaus besitzen das neue Verfahren und das entsprechende Koordinatenmessgerät im Vergleich zu klassischen Formmessgeräten den Vorteil, dass neben der Form einer Kontur auch verschiedene Dimensionen an dem Messobjekt und darüber hinaus auch die Lage des Messobjekts innerhalb des Messvolumens in ein und derselben Aufspannung, d.h. ohne Umspannen des Messobjekts, gemessen werden können. Dies trägt zu einer weiteren Erhöhung der Messgenauigkeit bei Messungen an komplexen Messobjekten bei, da jedes Umspannen des Messobjekts aufgrund der damit verbundenen Toleranzen die Messgenauigkeit beeinträchtigt. Die Vielseitigkeit des bekannten Koordinatenmessgerätes, die insbesondere aus der Verfahrbarkeit des Messkopfes entlang von drei, vorzugsweise jeweils orthogonal zueinander angeordneten Bewegungsachsen resultiert, bleibt in vollem Umfang erhalten. Hinzu kommt jedoch eine höhere Steifigkeit und damit eine höhere Messgenauigkeit bei Formmessungen mit dem Drehtisch.

Vorzugsweise besitzen das neue Koordinatenmessgerät und das darauf basierende Verfahren ein Messvolumen, das entlang jeder der drei genannten Bewegungsachsen größer ist als der Durchmesser des Drehtisches. Dies bedeutet, dass der Messkopf entlang jeder der drei genannten Bewegungsachsen mindestens um eine Strecke L_{X}, L_{Y} und L_{Z} verfahren werden kann, die größer ist als der Durchmesser des Drehtisches. Der Messkopf kann das Messobjekt daher aus nahezu beliebiger Richtung anfahren, und er kann aufgrund des im Vergleich zu klassischen Formmessgeräten sehr großen Messvolumens verschiedenartige Werkstücke vermessen.

Des Weiteren ist es bevorzugt, wenn das zumindest eine Luftlager nach der Aufnahme der Messwerte von der Auswerte- und Steuereinheit automatisch wieder aktiviert wird, insbesondere um weitere Messwerte an demselben Messobjekt aufzunehmen. Die Deaktivierung des zumindest einen Luftlagers erfolgt hiernach also für relativ kurze Zeitintervalle innerhalb eines länger andauernden Messablaufs.

Das neue Verfahren und das entsprechende Koordinatenmessgerät ermöglichen daher im Vergleich zu bislang bekannten Verfahren und Geräten eine flexiblere und genauere Vermessung von komplexen Werkstücken.

Das Deaktivieren von Hydrolagern, insbesondere Luftlagern an einem Koordinatenmessgerät ist als solches aus dem Stand der Technik schon bekannt gewesen, wie die eingangs angegebenen Dokumente zeigen. Im Unterschied zum Stand der Technik deaktivieren das neue Verfahren und das entsprechende Koordinatenmessgerät jedoch ein oder mehrere Hydrolager während des eigentlichen Messvorgangs. Hinzu kommt, dass die Auswerte- und Steuereinheit des neuen Koordinatenmessgerätes in der Lage ist, den Messkopf innerhalb des Messvolumens über motorische Antriebe zu positionieren. Das neue Verfahren und das entsprechende Koordinatenmessgerät ermöglichen daher die Durchführung einer Messung in einem automatischen Betrieb, wobei innerhalb des automatisierten Messablaufs zumindest ein Hydrolager deaktiviert wird, nachdem der Messkopf an der definierten Messposition positioniert wurde. Die Deaktivierung des zumindest einen Hydrolagers hat zur Folge, dass das entsprechende Gestellteil während des Messablaufs abgesetzt wird. Gleichzeitig muss die Auswerte- und Steuereinheit dafür Sorge tragen, dass die elektrischen Antriebe das Messelement in diesem Zustand nicht bewegen, weil dies ansonsten zu Schäden führen würde. Das neue Verfahren und das entsprechende Koordinatenmessgerät erfordern daher eine tiefgreifende Modifikation der automatisierten Messabläufe bekannter Koordinatenmessgeräte.

Dies gilt in besonderem Maße für ein Koordinatenmessgerät der eingangs genannten Art, das eine Werkstückaufnahme in Form eines Drehtisches aufweist, da die Drehtischachse in Abhängigkeit von der individuellen Beladung in verschiedene Richtungen geneigt sein kann. Dementsprechend befindet sich der Messkopf beim Drehen des Drehtisches in einer individuellen und in Abhängigkeit von der Beladung des Drehtisches variierenden Position relativ zu der Formkontur. Bei dem eingangs erwähnten Koordinatenmessgerät ist in Betracht gezogen worden, die Position des Messkopfes während der Aufnahme der Messwerte entlang der drei Bewegungsachsen nachzuregeln, um gegebenenfalls auf die individuelle Drehtischneigung zu reagieren. Dies ist bei dem neuen Verfahren und dem entsprechenden Koordinatenmessgerät nicht ohne weiteres möglich, da eine Bewegung des Messkopfes entlang derjenigen Bewegungsachse, deren Luftlager deaktiviert ist, nicht mehr möglich ist.

Nähere Untersuchungen haben jedoch gezeigt, dass die Vorteile des neuen Verfahrens und des entsprechenden Koordinatenmessgerätes die genannten Nachteile in einem nicht zu erwartenden Maße ausgleichen. Die oben genannte Aufgabe ist daher vollständig gelöst.

In einer bevorzugten Ausgestaltung der Erfindung spannen die erste und die zweite Bewegungsachse eine Ebene auf, die senkrecht zu der weiteren Achse liegt, wobei das erste Gestellteil über zumindest ein erstes Hydrolager gelagert ist, wobei das zweite Gestellteil über zumindest ein zweites Hydrolager gelagert ist, und wobei das zumindest eine erste und das zumindest eine zweite Hydrolager während der Aufnahme der Messwerte deaktiviert werden.

In dieser Ausgestaltung sind zwei Bewegungsachsen des Koordinatenmessgerätes während der Aufnahme der Messwerte temporär geklemmt. Die geklemmten Bewegungsachsen spannen eine Ebene auf, die in etwa senkrecht zu der Drehachse des Drehtisches liegt. Dabei ist eine etwaige Neigung der Drehtischachse infolge von Montagetoleranzen und/oder infolge einer exzentrischen Beladung des Drehtisches mit einem Messobjekt vernachlässigt. Die Ausgestaltung ermöglicht eine maximale Steifigkeit des Gestells in einer Ebene senkrecht zu der Drehtischachse. Üblicherweise handelt es sich hierbei um eine Horizontalebene. Die Ausgestaltung ermöglicht eine besonders hohe Steigerung der Messgenauigkeit.

In einer alternativen Ausgestaltung spannen die erste und die zweite Bewegungsachse eine Ebene auf, die senkrecht zu der weiteren Achse liegt, wobei das erste Gestellteil über zumindest ein erstes Hydrolager gelagert ist, wobei das zweite Gestellteil über zumindest ein zweites Hydrolager gelagert ist, und wobei das zumindest eine erste Hydrolager während der Aufnahme der Messwerte deaktiviert wird, während das zumindest eine zweite Hydrolager während der Aufnahme der Messwerte aktiviert bleibt.

In dieser Ausgestaltung ist der Messkopf nur in einer Richtung der oben erwähnten Ebene geklemmt, während er in der anderen Achsrichtung weiterhin bewegt werden kann. In einem bevorzugten Ausführungsbeispiel, in dem das Koordinatenmessgerät in Portalbauweise realisiert ist, wird vorteilhaft diejenige Bewegungsachse blockiert, entlang der das Portal relativ zu der Werkstückaufnahme bewegt werden kann. Häufig wird diese Bewegungsachse als Y-Achse bezeichnet. Hingegen bleibt der Schlitten an der Traverse des Portals in diesem Ausführungsbeispiel beweglich, weil die Hydrolager des Schlittens aktiviert bleiben. Die Ausgestaltung besitzt den Vorteil, dass die Auswerte- und Steuereinheit einen Exzenterfehler, d.h. eine außermittige Aufspannung des Messobjekts auf dem Drehtisch, auf relativ einfache Weise ausregeln kann, indem sie den Messkopf mithilfe der Antriebe für die zweite Bewegungsachse näher zum Messobjekt hin oder weiter vom Messobjekt weg fährt. Die Ausgestaltung macht es möglich, den Messkopf in einem optimalen Messbereich zu halten. Dementsprechend trägt diese Ausgestaltung auf andere Weise als die zuvor genannte Alternative zu einer hohen Messgenauigkeit bei. Die Ausgestaltung ist besonders vorteilhaft für die Vermessung von Messobjekten, die keine vollständige Rotationssymmetrie aufweisen, wie etwa Zylinderhalbschalen.

In einer weiteren Ausgestaltung, die sowohl für sich genommen als auch in Kombination mit den vorhergehenden Ausgestaltungen von Vorteil ist, verläuft die dritte Bewegungsachse weitgehend parallel zu der weiteren Achse, wobei das dritte Gestellteil über zumindest ein drittes Hydrolager gelagert ist, und wobei das zumindest eine dritte Hydrolager während der Aufnahme der Messwerte deaktiviert wird.

In dieser Ausgestaltung wird der Messkopf entlang einer Bewegungsachse geklemmt, die im Wesentlichen parallel zu der Drehachse des Drehtisches verläuft. Bei einem Koordinatenmessgerät in Portal- oder Brückenbauweise ist dies typischerweise die Bewegungsachse, entlang der die Pinole mit dem Messkopf vertikal bewegt wird. Die Pinole ist bei Koordinatenmessgeräten in Portal- oder Brückenbauweise in der Regel das schwingungsanfälligste Gestellteil, da die Pinole im Vergleich zu dem Portal und dem Portalschlitten relativ lange, frei hängende Bereiche aufweist. Die Klemmung dieser Bewegungsachse trägt daher in besonderem Maße dazu bei, Messfehler infolge von Maschinenschwingungen zu reduzieren.

In einer weiteren Ausgestaltung verläuft die dritte Bewegungsachse parallel zu der weiteren Achse, wobei das dritte Gestellteil über zumindest ein drittes Hydrolager gelagert ist, und wobei das zumindest eine dritte Hydrolager während der Aufnahme der Messwerte aktiviert bleibt.

In dieser Ausgestaltung bleibt der Messkopf entlang der dritten Bewegungsachse gezielt bewegbar, während zumindest eine andere Bewegungsachse geklemmt ist. Besonders vorteilhaft ist diese Ausgestaltung, wenn die beiden anderen Bewegungsachsen durch Deaktivieren der jeweiligen Hydrolager geklemmt werden. Die Ausgestaltung macht es möglich, den Messkopf während der Messung entlang der dritten Bewegungsachse zu verfahren. Dies kann vorteilhaft genutzt werden, um beispielsweise den Außenumfang eines rotationssymmetrischen Zylinders oder die zylindrische Innenwand einer Bohrung helixartig abzutasten. Mit anderen Worten kann der Messkopf in dieser Ausgestaltung parallel zu der Drehachse verfahren werden, um die Formkurve in verschiedenen Höhenlagen abzutasten.

Darüber hinaus kann man mit dieser Ausgestaltung einen sogenannten Z-Schlag bei der Aufnahme der Messwerte ausregeln bzw. eliminieren. Ein Z-Schlag in diesem Sinne ist die Veränderung der Höhenlage der zu vermessenden Formkontur, die sich aufgrund einer Neigung des Drehtisches einstellt. In bevorzugten Ausführungsbeispielen wird die Neigung der Drehtischachse vor der eigentlichen Aufnahme der Messwerte in einem ersten Messdurchgang bestimmt, der als solcher in der eingangs genannten DE 10 2008 058 198 A1 beispielhaft beschrieben ist. Dieses Dokument ist hier folglich durch Bezugnahme aufgenommen, insbesondere im Hinblick auf die Erläuterungen zur Bestimmung der Neigung der Drehtischachse. Anschließend werden die eigentlichen Messwerte für die Formkontur in einem zweiten Messdurchlauf aufgenommen, wobei die Auswerte- und Steuereinheit den Messkopf entlang der dritten Bewegungsachse in Abhängigkeit von der zuvor bestimmten Neigung der Drehtischachse - vorzugsweise alternierend - bewegt. Die Ausgestaltung ermöglicht eine hohe Messgenauigkeit insbesondere an Messobjekten, die eine sehr unsymmetrische Gewichtsverteilung aufweisen, und/oder signifikanten Neigungen der Drehtischachse infolge von Montagetoleranzen.

In einer weiteren Ausgestaltung weist das Koordinatenmessgerät einen ersten Lageregler auf, der eine Position des Messkopfes relativ zu der Werkstückaufnahme entlang der ersten Bewegungsachse regelt. Des Weiteren weist das Koordinatenmessgerät einen zweiten Lageregler auf, der eine Position des Messkopfes relativ zu der Werkstückaufnahme entlang der zweiten Bewegungsachse regelt. Schließlich weist das Koordinatenmessgerät einen dritten Lageregler auf, der eine Position des Messkopfes relativ zu der Werkstückaufnahme entlang der dritten Bewegungsachse regelt. Der jeweilige Lageregler für die erste, zweite und dritte Bewegungsachse wird während der Aufnahme der aktuellen Messwerte deaktiviert, wenn ein zu derselben Bewegungsachse gehörendes Luftlager deaktiviert wird.

In dieser Ausgestaltung wird die Bewegung des Messkopfes nicht nur geklemmt, indem ein oder mehrere Hydrolager deaktiviert werden. Zusätzlich werden auch ein oder mehrere Lageregler temporär deaktiviert. Die Ausgestaltung trägt nochmals dazu bei, Schwingungen des Gestells während der Aufnahme der Messwerte zu vermeiden oder zumindest weitgehend zu reduzieren. Solange die Lageregler aktiv sind, überprüfen sie in einem geschlossenen Regelkreis wiederholt die aktuelle Position des Messkopfes entlang der jeweils zugehörigen Bewegungsachse. Wird eine Abweichung zwischen Soll- und Istposition festgestellt, steuern die Lageregler die elektrischen Antriebe der zugehörigen Bewegungsachse an, um die Positionsdifferenz auszugleichen. Selbst wenn der Messkopf durch Deaktivieren eines oder mehrerer Hydrolager in der entsprechenden Bewegungsachse prinzipiell fixiert ist, können durch wiederholtes Ansteuern der elektrischen Antriebe Schwingungen des Gestells erzeugt werden. Dieser nachteilige Effekt wird durch die vorliegende Ausgestaltung minimiert.

In einer weiteren Ausgestaltung ist der Drehtisch über zumindest ein weiteres Hydrolager gelagert, wobei das weitere Hydrolager während der Aufnahme der aktuellen Messwerte aktiviert bleibt.

In dieser Ausgestaltung ist nicht nur der Messkopf über zumindest ein Hydrolager beweglich gelagert. Vielmehr ist auch der Drehtisch über das zumindest eine weitere Hydrolager gelagert. Das weitere Hydrolager bleibt während der Messung aktiv, um eine möglichst gleichmäßige und reibungsfreie Drehung des Drehtisches zu ermöglichen. Dementsprechend beinhaltet diese Ausgestaltung, dass die Luftversorgung für das Koordinatenmessgerät bzw. die Versorgung mit einem anderen Strömungsmedium im Fall von anderen Hydrolagern auch während der temporären Deaktivierung einzelner Hydrolager aufrechterhalten bleibt. Die Ausgestaltung ermöglicht somit eine schnellere Wiederinbetriebnahme eines nur temporär deaktivierten Hydrolagers.

In einer weiteren Ausgestaltung weist der Messkopf einen Taststift zum Berühren des Messobjekts und zumindest einen Messkraftgenerator auf, der dazu ausgebildet ist, eine definierte Sollmesskraft auf den Taststift auszuüben.

In dieser Ausgestaltung ist der Messkopf ein sogenannter aktiver Messkopf. Der Messkraftgenerator ist in der Lage, eine Kraft auf den Taststift in zumindest einer definierten Bewegungsrichtung auszuüben. Wenn der Taststift frei im Raum hängt, ohne ein Messobjekt zu berühren, hat die Messkraft zur Folge, dass der Taststift relativ zu der Messkopfbasis ausgelenkt wird. Liegt der Taststift jedoch an einem Messobjekt an, kann er der Messkraft des Messkraftgenerators nicht ausweichen. Er überträgt die Messkraft auf das Messobjekt.

Aktive Messköpfe in diesem Sinne sind bekannt. Im Zusammenhang mit dem neuen Verfahren und dem entsprechenden Koordinatenmessgerät besitzt ein aktiver Messkopf den Vorteil, dass der Messkraftgenerator vorteilhaft dazu verwendet werden kann, unterschiedliche Abstände der Messobjektoberfläche zu dem feststehenden Messkopf bis zu einem gewissen Betrag auszugleichen. Dementsprechend steuert die Auswerte- und Steuereinheit des neuen Koordinatenmessgerätes den Messkraftgenerator in bevorzugten Ausführungsbeispielen so an, dass die Taststiftspitze während der Aufnahme der Messwerte den Variationen der Formkontur folgt und somit kontinuierlich in Kontakt mit der Messobjektoberfläche gehalten wird. Der Taststift wird also mit Hilfe des Messkraftgenerators so ausgelenkt, dass er den Kontakt zu der Werkstückoberfläche beibehält, auch wenn die Werkstückoberfläche eine Vertiefung aufweist. In einem Ausführungsbeispiel steuert die Auswerte- und Steuereinheit den Messkraftgenerator parallel zur Drehtischachse in Abhängigkeit von einer zuvor bestimmten Neigung der Drehtischachse an, um auf diese Weise einen Z-Höhenschlag auszuregeln, ohne den Messkopf selbst mithilfe der Antriebe des Koordinatenmessgerätes zu bewegen. Die Ausgestaltung ermöglicht auf einfache Weise, dass die Taststiftspitze auch bei Abweichungen des Messobjekts von einer gewünschten Solllage mit hoher Messgenauigkeit vermessen werden kann.

In einer weiteren Ausgestaltung besitzt der Messkopf einen Arbeitsbereich, der eine minimale Sollmesskraft und eine maximale Sollmesskraft definiert, wobei die Messwerte mit einer definierten Sollmesskraft aufgenommen werden, die mindestens 30% der maximalen Sollmesskraft, vorzugsweise mindestens 50% der maximalen Sollmesskraft beträgt.

In dieser Ausgestaltung wird der Messkraftgenerator eines aktiven Messkopfes während der Aufnahme der Messwerte mit einem Steuersignal angesteuert, das bei einer Solllage des Messobjekts eine relativ hohe Messkraft erzeugt. Gleichermaßen wird die definierte Position eines passiven Messkopfes so gewählt, dass der Taststift eine relativ hohe Messkraft auf das Messobjekt ausübt. Die Ausgestaltung besitzt den Vorteil, dass der Taststift mit einer hohen Wahrscheinlichkeit den Kontakt zu der Oberfläche des Messobjekts behält. Sogenannte "Luftantastungen", die insbesondere bei einer exzentrischen Beladung des Drehtisches und/oder bei einer schiefen Aufspannung des Werkstücks auftreten können, werden minimiert.

In einer weiteren Ausgestaltung werden vor dem Deaktivieren des zumindest einen Hydrolagers erste Messwerte aufgenommen, die eine Position des Messobjekts relativ zu den Bewegungsachsen repräsentieren, wobei der Messkopf in Abhängigkeit von den ersten Messwerten an der definierten Position positioniert wird.

In dieser Ausgestaltung erfolgt die Aufnahme der eigentlichen Messwerte zum Bestimmen der Formkontur in zwei Schritten. Zunächst werden in einem ersten Messdurchlauf erste Messwerte an dem Messobjekt aufgenommen, indem der Messkopf in eine definierte Messposition relativ zu dem Messobjekt gebracht wird. Dabei sind vorzugsweise alle Hydrolager des Koordinatenmessgerätes aktiv. Aus den ersten Messwerten kann die aktuelle Lage des Messobjekts innerhalb des Messvolumens bestimmt werden. In einigen Ausführungsbeispielen können mehrere Einzelantastungen des Messobjekts an definierten Messpunkten genügen, um die aktuelle Lage des Messobjekts in dem Messvolumen zu bestimmen. Beispielsweise kann die Auswerte- und Steuereinheit das Messobjekt an drei Messpunkten antasten. In anderen Ausführungsbeispielen wird der Drehtisch bereits zur Aufnahme der ersten Messwerte gedreht und die Auswerte- und Steuereinheit nimmt mithilfe des Messkopfes eine Vielzahl von Messwerten auf, die bereits die Formkontur an dem Messobjekt repräsentieren. In einem zweiten Messdurchlauf verwendet die Auswerte- und Steuereinheit die Messergebnisse des ersten Messdurchlaufs, um die Position des Messkopfes relativ zu dem Messobjekt optimal zu bestimmen. Dementsprechend bewegt die Auswerte- und Steuereinheit den Messkopf mithilfe der Antriebe des Koordinatenmessgerätes zunächst an die Messposition, die in Abhängigkeit von den ersten Messwerten bestimmt wurde. Anschließend deaktiviert die Auswerte- und Steuereinheit das zumindest eine Hydrolager, um die Raumkontur entsprechend dem neuen Verfahren und dem neuen Koordinatenmessgerät mit einer höheren Messgenauigkeit zu bestimmen. Die Ausgestaltung besitzt den Vorteil, dass die Auswerte- und Steuereinheit den Messkopf stets an eine optimale Messposition bewegen kann, um insbesondere die Sensoren eines messenden Messkopfes in einem linearen mittleren Messbereich zu betreiben. Die Messgenauigkeit des neuen Verfahrens und des entsprechenden Koordinatenmessgerätes wird weiter gesteigert.

In einer weiteren Ausgestaltung werden Kalibrierdaten bereitgestellt, die eine Positionsänderung des Messkopfes infolge der Deaktivierung des zumindest einen Luftlagers repräsentieren.

Ein aktives Hydrolager hebt das gelagerte Gestellteil um eine gewisse Distanz an, indem zwischen dem Gestellteil und der Gegenfläche ein Luft- oder Flüssigkeitspolster erzeugt wird. Beim Deaktivieren des Hydrolager senkt sich das entsprechende Gestellteil auf die Gegenfläche des Hydrolager ab. Daher verändert sich die Position des Messkopfes in dem Messvolumen des Koordinatenmessgerätes, wenn das zumindest eine Hydrolager deaktiviert wird. In dieser bevorzugten Ausgestaltung besitzt das Koordinatenmessgerät Kalibrierdaten, die eine solche Positionsänderung des Messkopfes repräsentieren. Die Auswerte- und Steuereinheit ist vorteilhafterweise dazu ausgebildet, die aktuellen Messwerte unter Verwendung der Kalibrierdaten zu bestimmen. Die Ausgestaltung besitzt den Vorteil, dass die aktuellen Messwerte die Formkontur noch genauer repräsentieren, insbesondere in Bezug auf weitere Formmerkmale an demselben Messobjekt. Die Ausgestaltung ist daher besonders vorteilhaft, wenn die Bestimmung der Formkontur an dem Messobjekt nur einer von mehreren Messvorgängen ist und darüber hinaus beispielsweise auch bestimmte Dimensionen an dem Messobjekt bestimmt werden.

Darüber hinaus können die Kalibrierdaten vorteilhaft verwendet werden, um einen sogenannten Setzfehler zu korrigieren. Wenn beispielsweise ein kegelstumpfförmiges Messobjekt mit dem neuen Verfahren vermessen werden soll, kann das Deaktivieren des zumindest einen Hydrolager dazu führen, dass die Auswerte- und Steuereinheit einen geringfügig größeren oder geringfügig kleineren Durchmesser an dem Messobjekt "erwischt". Die Auswerte- und Steuereinheit vermisst das Messobjekt aufgrund der Deaktivierung des zumindest einen Hydrolagers in einer anderen Schnittebene als ohne Deaktivierung. Dieser Schnittebenenversatz kann mithilfe der Kalibrierdaten vorteilhaft korrigiert werden.

In einer weiteren Ausgestaltung wird zumindest ein mechanisches Klemmelement bereitgestellt, mit dem das zumindest eine Messelement nach dem Deaktivieren des zumindest einen Hydrolagers zusätzlich noch mechanisch geklemmt wird.

In dieser Ausgestaltung besitzt das neue Koordinatenmessgerät zumindest ein mechanisches Klemmelement, das dazu ausgebildet ist, das Messelement direkt und/oder über ein Gestellteil zusätzlich noch mechanisch zu fixieren. Die Ausgestaltung ermöglicht eine besonders hohe Steifigkeit und dadurch eine besonders hohe Messgenauigkeit für die Formmessung an einem Messobjekt, das auf dem Drehtisch angeordnet ist.

Es versteht sich, dass die vorstehend genannten und die nachstehend noch zu erläuternden Merkmale nicht nur in der jeweils angegebenen Kombination, sondern auch in anderen Kombinationen verwendbar sind, ohne den Rahmen der vorliegenden Erfindung (definiert durch die Ansprüche), zu zu verlassen.

Ausführungsbeispiele der Erfindung sind in der Zeichnung dargestellt und werden in der nachfolgenden Beschreibung näher erläutert. Es zeigen:
- Fig. 1: ein Ausführungsbeispiel des neuen Koordinatenmessgerätes,
- Fig. 2a,b: eine vereinfachte Darstellung des Messkopfes, der bei dem Koordinatenmessgerät aus Fig. 1 zur Anwendung kommt, und
- Fig. 3: eine vereinfachte Darstellung von Funktionsbaugruppen, die bei dem Koordinatenmessgerät aus Fig. 1 entsprechend dem neuen Verfahren angesteuert werden.

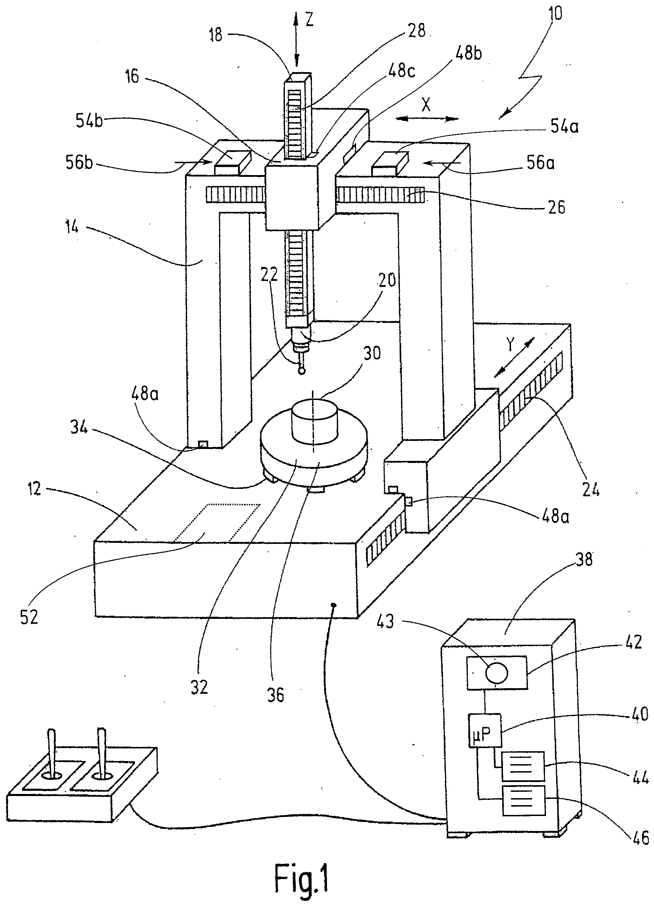

In Fig. 1 ist ein Ausführungsbeispiel des neuen Koordinatenmessgerätes in seiner Gesamtheit mit der Bezugsziffer 10 bezeichnet. Das Koordinatenmessgerät 10 besitzt eine Basis 12, auf der hier ein Portal 14 angeordnet ist. Das Portal 14 trägt einen Schlitten 16. An dem Schlitten 16 ist eine Pinole 18 angeordnet. Am unteren freien Ende der Pinole 18 ist ein Messkopf 20 angeordnet, der hier einen Taststift 22 trägt. In anderen Ausführungsbeispielen kann der Messkopf 20 ein berührungsloser Messkopf sein, beispielsweise ein Messkopf, der den Abstand zu einem Messpunkt an einem Messobjekt kapazitiv oder optisch bestimmt.

Mit den Bezugsziffern 24, 26, 28 ist jeweils ein Maßstab bezeichnet, mit dessen Hilfe die Position des Portals 14 relativ zu der Basis 12, die Position des Schlittens 16 relativ zu dem Portal 14 und die Position der Pinole 18 relativ zu dem Schlitten 16 bestimmt werden kann. Die Maßstäbe 24, 26, 28 werden in bekannter Weise mithilfe geeigneter Sensoren (hier nicht dargestellt) ausgelesen. Beispielsweise handelt es sich um Glasmaßstäbe, die jeweils mit einem optischen Sensor ausgelesen werden.

Mit der Bezugsziffer 30 ist ein Messobjekt bezeichnet, das auf einem Drehtisch 32 angeordnet ist. Der Drehtisch 32 ist hier über Luftlager 34 auf der Basis 12 gelagert. Über einen (hier nicht dargestellten) elektrischen Antrieb kann der Drehtisch 32 um eine Achse 36 gedreht werden. Mithilfe des Drehtisches 32 kann das Messobjekt 30 daher relativ zu dem Messkopf 20 und dem Taststift 22 gedreht werden.

Mit der Bezugsziffer 38 ist eine Auswerte- und Steuereinheit bezeichnet, die in diesem Fall sämtliche Antriebe des Koordinatenmessgerätes 10 steuert. Darüber hinaus empfängt die Auswerte- und Steuereinheit 38 die Messwerte aller Sensoren des Koordinatenmessgerätes 10, und sie bestimmt in Abhängigkeit von den Messwerten Raumkoordinaten und/oder eine Formkontur an dem Messobjekt 30. Mit der Bezugsziffer 40 ist ein Prozessor der Auswerte- und Steuereinheit 38 bezeichnet. Bezugsziffer 42 bezeichnet ein Display, auf dem hier beispielhaft eine kreisförmige Formkontur 43 dargestellt ist, die den Außenumfang des hier zylindrischen Messobjekts 30 repräsentiert.

Bezugsziffer 44 bezeichnet einen ersten Speicher, in dem ein Auswerte- und Steuerprogramm gespeichert ist. Das Steuerprogramm beinhaltet Algorithmen, mit denen beispielsweise die von den Maßstäben 24, 26, 28 gelieferten Messwerte verarbeitet werden, um die Raumkoordinaten von ausgewählten Messpunkten an dem Messobjekt 30 zu bestimmen.

Ein weiterer Speicher 46 enthält in diesem Ausführungsbeispiel Kalibrierdaten, die die Auswerte- und Steuereinheit 38 verwendet, um die Messwerte zu verarbeiten und die Formkontur des Messobjekts 30 zu bestimmen. In den bevorzugten Ausführungsbeispielen repräsentieren die Kalibrierdaten unter anderem eine Positionsänderung des Messkopfes 20, die aus der Deaktivierung der nachfolgend beschriebenen Luftlager gemäß dem neuen Verfahren resultiert.

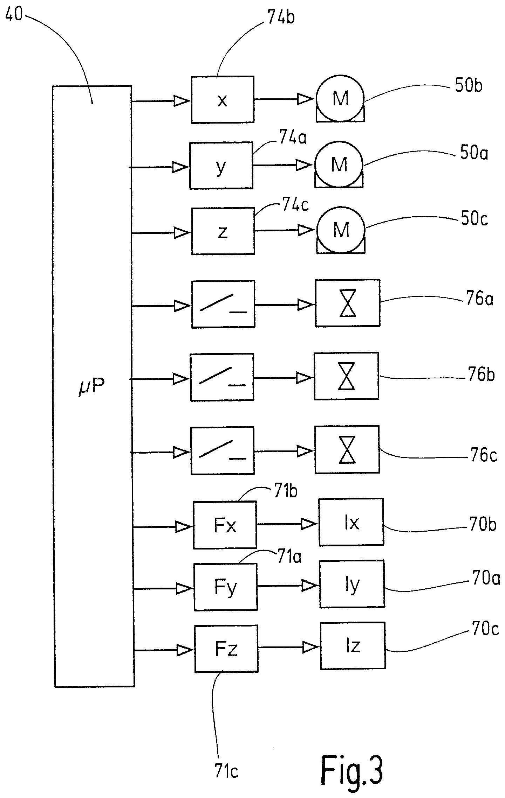

Bei den Bezugsziffern 48a, 48b, 48c sind hier beispielhaft Luftlager angedeutet, über die das Portal 14, der Schlitten 16 und die Pinole 18 relativ zu der Basis 12 und damit auch relativ zu dem Drehtisch 32 beweglich gelagert sind. Alternativ könnte das Koordinatenmessgerät 10 Hydrolager besitzen, die anstelle von Luft ein anderes Medium, etwa ein Wasser-Öl-Gemisch verwenden. Das Koordinatenmessgerät 10 besitzt eine Anzahl von elektrischen Antrieben 50a, 50b, 50c (siehe Fig. 3), mit deren Hilfe die Auswerte- und Steuereinheit 38 den Messkopf 20 innerhalb eines Messvolumens verfahren kann, das von den maximalen Verfahrwegen des Portals 14, des Schlittens 16 und der Pinole 18 aufgespannt wird. Mithilfe eines ersten Antriebs 50a kann die Auswerte- und Steuereinheit 38 das Portal 14 in Richtung des Pfeils Y relativ zu der Basis 12 verfahren. Typischerweise wird diese Bewegungsachse bei Koordinatenmessgeräten in Portalbauweise als Y-Achse bezeichnet.

Über einen weiteren Antrieb 50b kann die Auswerte- und Steuereinheit 38 den Schlitten 16 in Richtung eines Pfeils X verfahren. Dementsprechend wird die Bewegungsachse des Schlittens 16 üblicherweise als X-Achse bezeichnet. Die Auswerte- und Steuereinheit 38 kann die Pinole 18 in Richtung einer dritten Bewegungsachse Z verfahren, die folglich Z-Achse genannt wird. Die X- und Y-Achse spannen zusammen eine Ebene 52 auf, die bei Koordinatenmessgeräten in Portalbauweise üblicherweise eine horizontale Messebene ist. Die Drehachse 36 des Drehtisches 32 steht hier senkrecht zu der Ebene 52 und parallel zu der Bewegungsachse Z der Pinole 18.

Mit den Bezugsziffern 54a, 54b sind hier beispielhaft zwei Schieber bezeichnet, die an der Traverse des Portals 14 auf gegenüberliegenden Seiten des Schlittens 16 angeordnet sind. Die Auswerte- und Steuereinheit 38 kann in diesem Ausführungsbeispiel den Schieber 54a in Richtung des Pfeils 56a verschieben. In gleicher Weise kann die Auswerte- und Steuereinheit 38 den Schieber 54b in Richtung des Pfeils 56b verschieben. Die Schieber 54a, 54b bilden zusammen ein mechanisches Klemmelement, mit dem der Schlitten 16 in bevorzugten Ausführungsbeispielen des neuen Verfahrens mechanisch geklemmt werden kann, um eine besonders steife Gestellstruktur für die Durchführung einer Formmessung an dem Messobjekt 30 zu erhalten.

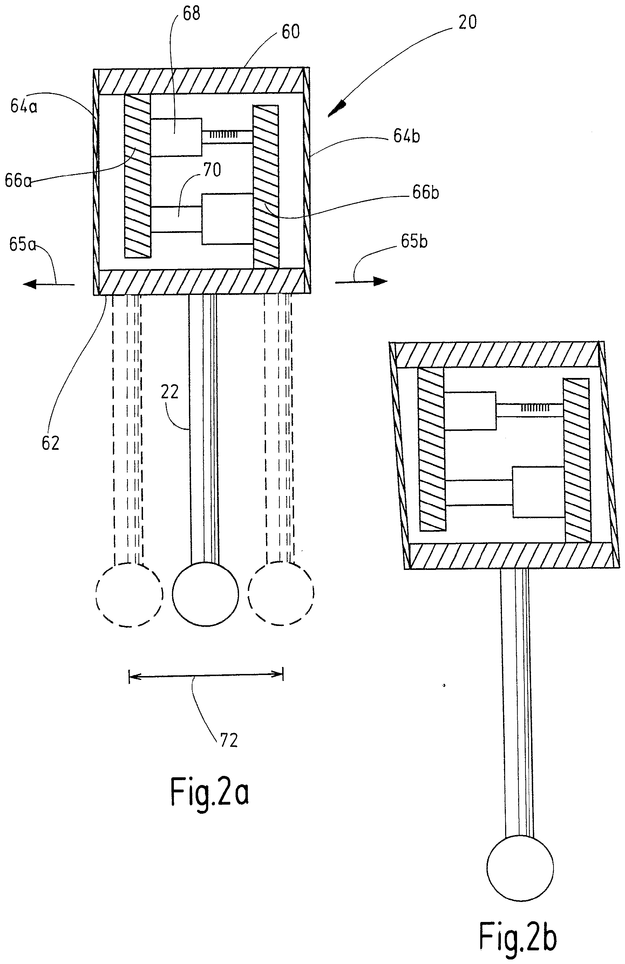

In den Fig. 2a und 2b ist der Messkopf 20 des Koordinatenmessgerätes 10 in einer stark vereinfachten Darstellung gezeigt. Der Messkopf 20 besitzt eine Messkopfbasis 60 und ein Teil 62, das mit der Messkopfbasis 60 über zwei Blattfedern 64a, 64b verbunden ist. Infolge der Blattfedern 64a, 64b ist das Teil 62 relativ zu der Messkopfbasis 60 in Richtung der Pfeile 65a, 65b beweglich, wie dies in Fig. 2b dargestellt ist.

Die Messkopfbasis 60 ist mit einem ersten Trägerelement 66a verbunden. Das Teil 62 ist mit einem zweiten Trägerelement 66b verbunden. Die Trägerelemente 66a, 66b stehen sich einander gegenüber. Zwischen den Trägerelementen 66a, 66b ist ein Sensor 68 angeordnet, mit dessen Hilfe die Verschiebung des Teils 62 relativ zu der Messkopfbasis 60 in Richtung der Pfeile 65a, 65b erfasst werden kann. Im dargestellten Ausführungsbeispiel ist der Sensor 68 eine Tauchspule. Alternativ könnte der Sensor 68 ein piezoelektrischer, kapazitiver, optischer und/oder magnetischer Sensor sein.

Mit der Bezugsziffer 70 ist ein Messkraftgenerator bezeichnet, der in der Lage ist, die Trägerelemente 66a, 66b in Richtung der Pfeile 65a, 65b auseinander zu drücken oder in entgegengesetzter Richtung zusammenzuziehen. Mithilfe des Messkraftgenerators 70 kann die Auswerte- und Steuereinheit 38 eine Messkraft auf den Taststift 22 ausüben. Wie bei der Bezugsziffer 72 dargestellt ist, besitzt der Messkraftgenerator 70 einen Arbeitsbereich, der eine minimale Sollmesskraft und eine maximale Sollmesskraft definiert. Solange der Taststift 22 nicht an einem Messobjekt anliegt, zeigt sich die Messkraft in einer entsprechenden Auslenkung des Taststiftes 22 relativ zu der Messkopfbasis 60.

In der Darstellung der Fig. 2a, 2b kann der Taststift 22 nur in einer Richtung relativ zu der Messkopfbasis 60 ausgelenkt werden. In den bevorzugten Ausführungsbeispielen besitzt der Messkopf 20 jedoch drei Federparallellogramme und Messkraftgeneratoren 70, mit deren Hilfe die Auswerte- und Steuereinheit 38 den Taststift 22 wahlweise entlang der Bewegungsachsen X, Y und Z auslenken bzw. mit einer Messkraft beaufschlagen kann. In den bevorzugten Ausführungsbeispielen des neuen Verfahrens nutzt die Auswerte- und Steuereinheit 38 diese Eigenschaft, um den Taststift 22 während der Aufnahme der Messwerte mit dem Messobjekt 30 in Kontakt zu bringen. Die drei Messkraftgeneratoren 70 für die Bewegungsachsen X, Y, Z, die den drei Bewegungsachsen des Koordinatenmessgerätes 10 entsprechen, sind in Fig. 3 bei den Bezugsziffern 70a, 70b, 70c nochmals angedeutet.

Fig. 2 zeigt eine vereinfachte Darstellung eines sogenannten aktiven Messkopfes, bei dem die Messkraft mit Hilfe des Messkraftgenerators 70 für jede Bewegungsrichtung geregelt werden kann. Ein entsprechender Regler ist für jede Messkraftrichtung in Fig. 3 bei den Bezugsziffern 71 a, 71 b, 71 c angedeutet. In anderen Ausführungsbeispielen ist der Messkopf hingegen ein passiver Messkopf, bei dem die Messkraft allein über eine Feder mit einer bekannten Federkonstanten sowie die Position des Messkopfes 20 relativ zum Werkstück 30 eingestellt wird.

Fig. 3 zeigt den Mikroprozessor 40 der Auswerte- und Steuereinheit 38 sowie weitere Funktionsbaugruppen des Koordinatenmessgerätes 10. Mit der Bezugsziffer 74a ist ein Lageregler bezeichnet, über den der Mikroprozessor 40 den elektrischen Antrieb für die Y-Achse des Koordinatenmessgerätes 10 ansteuert. Vergleichbare Lageregler 74a, 74c sind für die X- und die Z-Bewegungsachse vorgesehen. Die Lageregler 74 bilden einen geschlossenen Regelkreis, der jeweils eine aktuelle Istposition des Portals 14, des Schlittens 16 bzw. der Pinole 18 auswertet und in Abhängigkeit davon die jeweiligen elektrischen Antriebe 50a, 50b, 50c ansteuert, um die beweglichen Gestellteile auf eine Sollposition zu fahren, die der Mikroprozessor 40 in Abhängigkeit von dem Steuerprogramm im Speicher 44 vorgibt.

Mit der Bezugsziffer 76a, 76b, 76c sind Ventile bezeichnet, über die die Auswerte- und Steuereinheit 38 die Luftlager 48a, 48b, 48c an dem Portal 14, dem Schlitten 16 und der Pinole 18 aktivieren oder deaktivieren kann. Entsprechend dem neuen Verfahren wird der Messkopf 20 zunächst in eine definierte Messposition relativ zu dem Messobjekt 30 bewegt. Anschließend deaktiviert die Auswerte- und Steuereinheit 38 die Luftlager 48 von einer oder mehreren Bewegungsachsen, um den Messkopf 20 an der definierten Messposition mit einer erhöhten Steifigkeit zu fixieren. In dem dargestellten Ausführungsbeispiel bewegt die Auswerte- und Steuereinheit 38 den Messkopf 20 an eine definierte Messposition, an der der Taststift 22 die zu vermessende Formkontur an dem Messobjekt 30 berührt. Anschließend steuert die Auswerte- und Steuereinheit 38 den Drehtisch 32 an, um das Messobjekt 30 relativ zu dem Taststift 22 zu drehen. Mithilfe der Sensoren 68 im Messkopf werden die Auslenkungen des Taststiftes 22 infolge der Drehung des Messobjekts 30 erfasst. Anhand dieser Messwerte und - in den bevorzugten Ausführungsbeispielen - anhand der Kalibrierdaten im Speicher 46 bestimmt die Auswerte- und Steuereinheit 38 anschließend die Formkontur.

In einem bevorzugten Ausführungsbeispiel des neuen Verfahrens wird in einem ersten Schritt die Neigung der Achse 36 des Drehtisches 32 mithilfe eines Referenzobjekts bestimmt, beispielsweise mit einem Prüfzylinder mit bekannten Eigenschaften oder mit einem Lehrring. Anschließend wird das Messobjekt 30 mit der zu vermessenden Formkontur möglichst zentrisch auf dem Drehtisch 32 aufgespannt. In einigen Ausführungsbeispielen besitzt der Drehtisch 32 ein Drei-Backen-Futter (hier nicht dargestellt), mit dem das Messobjekt 30 fixiert werden kann.

Danach wird das Messobjekt 30 an ausgewählten Messpunkten angetastet, indem die Auswerte- und Steuereinheit 38 den Messkopf 20 so weit an das Messobjekt 30 bewegt, dass der Taststift 22 den ausgewählten Messpunkt mit einer definierten Sollmesskraft berührt. Aus der Lage der angetasteten Messpunkte kann die Lage des Werkstücks 30 innerhalb des Messvolumens bestimmt werden. Alternativ oder ergänzend kann die Auswerte- und Steuereinheit 38 den Drehtisch 32 drehen, um die zu vermessende Formkontur in einem ersten Messdurchlauf abzutasten.

Mit den erhaltenen ersten Messwerten wird in bevorzugten Ausführungsbeispielen überprüft, ob die Werkstückachse und die Drehtischachse 36 zumindest annähernd gleich sind. Wenn die Werkstückachse um mehr als einen definierten Grenzwert von der Drehtischachse 36 abweicht, erzeugt die Auswerte- und Steuereinheit 38 in den bevorzugten Ausführungsbeispielen eine Warnmeldung, die den Bediener des Koordinatenmessgerätes 10 darüber informiert, dass die Werkstückaufspannung korrigiert werden muss. In einigen Ausführungsbeispielen kann die Auswerte- und Steuereinheit 38 die Aufspannung des Werkstücks 30 mithilfe geeigneter motorischer Antriebe an dem Drehtisch (hier nicht dargestellt) automatisch korrigieren.

Der vordefinierte Grenzwert ergibt sich in den bevorzugten Ausführungsbeispielen aus dem Arbeitsbereich 72, in dem der Taststift 22 mithilfe der Messkraftgeneratoren 70 ausgelenkt werden kann. In bevorzugten Ausführungsbeispielen ist der vordefinierte Grenzwert kleiner als der maximal mögliche Arbeitsbereich 72, damit der Sensor 68 des Messkopfes 20 in einem weitgehend linearen mittleren Arbeitsbereich gehalten wird.

Im nächsten Schritt bestimmt die Auswerte- und Steuereinheit 38 unter Berücksichtigung der Kalibrierdaten 46 eine optimale Messposition für den Messkopf 20 innerhalb des Messvolumens. Die Auswerte- und Steuereinheit 38 fährt den Messkopf 20 an der optimalen Messposition so weit an das Messobjekt 30 heran, dass der Taststift 22 die Oberfläche des Messobjekts im Bereich der zu vermessenden Formkontur berührt.

Gemäß dem neuen Verfahren schaltet die Auswerte- und Steuereinheit 38 anschließend die Luftlager für eine oder mehrere Bewegungsachsen des Koordinatenmessgerätes 10 ab. In einigen Ausführungsbeispielen werden die Luftlager für die X- und Y-Achse deaktiviert, während die Luftlager für die Z-Achse aktiv bleiben, um den Z-Versatz des Messkopfes 20 beim Deaktivieren der Luftlager für die X- und Y-Achse auszugleichen.

In anderen Ausführungsbeispielen deaktiviert die Auswerte- und Steuereinheit 38 die Luftlager für alle drei Bewegungsachsen des Koordinatenmessgerätes 10. Der Ausgleich des Z-Versatzes erfolgt hier vorzugsweise mithilfe des Messkraftgenerators für die Z-Achse im Messkopf 20. Alternativ kann der Versatz mithilfe der Kalibrierdaten 46 bereits von der Auswerte- und Steuereinheit 38 berücksichtigt werden, wenn die Auswerte- und Steuereinheit 38 die optimale Messposition für den Messkopf 20 bestimmt.

Danach erfolgt ein hochgenaues Abtasten der Formkontur an der Oberfläche des Messobjekts 30, indem die Auswerte- und Steuereinheit 38 den Drehtisch 32 um die Achse 36 dreht. In den bevorzugten Ausführungsbeispielen wird mithilfe der Messkraftgeneratoren für die X- und Y-Achse eine definierte Messkraft konstant über den gesamten Auslenkbereich des Taststiftes 22 erzeugt, um Luftantastungen zu vermeiden.

Anschließend bestimmt die Auswerte- und Steuereinheit in Abhängigkeit von den aufgenommenen Messwerten die Formkontur des Messobjekts 30.

In einigen Ausführungsbeispielen deaktiviert die Auswerte- und Steuereinheit 38 die Luftlager 48a für das Portal 14, während die Luftlager 48b für den Schlitten 16 aktiv bleiben. Dadurch ist es möglich, dass die Auswerte- und Steuereinheit den Messkopf 20 während der Aufnahme der Messwerte in X-Richtung verfahren kann, um der Formkontur des Messobjekts 30 über den Arbeitsbereich 72 des entsprechenden Messkraftgenerators 70 hinaus zu folgen. Dies ist besonders vorteilhaft, wenn das Messobjekt 30 exzentrisch auf den Drehtisch 32 aufgespannt ist.

In einigen Ausführungsbeispielen bestimmt die Auswerte- und Steuereinheit 38 den Exzenterfehler anhand von Erfahrungswerten, die in Form von Parameterdaten in dem Speicher 46 der Auswerte- und Steuereinheit 38 abgespeichert sind. Beispielsweise weisen mechanische Anschläge eine Reproduzierbarkeit auf, die typischerweise kleiner als 0,5 mm ist. Der Nenndurchmesser des Werkstücks ist aufgrund der CAD-Daten und/oder aufgrund der ersten Messwerte aus dem ersten Messdurchgang bekannt. Damit kann die Auswerte- und Steuereinheit 38 den Exzenterfehler abschätzen, der sich bei wiederholter Aufspannung von typgleichen Messobjekten im Rahmen einer Serienprüfung ergibt.

Das neue Verfahren und das neue Koordinatenmessgerät können anstelle des aktiven Messkopfes 20 auch mit einem passiven Messkopf (ohne Messkraftgeneratoren 70) verwendet werden. In diesem Fall arbeitet der Taststift 22 gegen eine mechanische Feder. Der Taststift 22 wird von der Auswerte- und Steuereinheit 38 so weit an das Messobjekt 30 herangefahren, dass der Taststift 22 beim Nenndurchmesser des Messobjekts 30 eine vordefinierte Auslenkung erfährt, um die gewünschte Messkraft zu erzeugen.

Darüber hinaus können das neue Verfahren und das neue Koordinatenmessgerät mit berührungslosen Messköpfen 20 verwendet werden. Auch in diesen Fällen bestimmt die Auswerte- und Steuereinheit 38 eine gewünschte Messposition des Messkopfes 20 im Messvolumen und deaktiviert anschließend ein oder mehrere Luftlager des Koordinatenmessgerätes 10. Insbesondere bei kapazitiven Abstandssensoren ist es vorteilhaft, unmittelbar vor der Aufnahme der Messwerte eine Kalibrierung des Messkopfes durchzuführen, indem beispielsweise der Messkopf 20 vor der Aufnahme der eigentlichen Messwerte auf das Messobjekt 30 zu bewegt wird und ein Vergleich der vom Messkopf 20 gelieferten Messwerte mit den Messwerten des Koordinatenmessgerätes 10 von den Maßstäben 24, 26, 28 durchgeführt wird.

Bei Messköpfen erfolgt die Antastung des Messobjekts 30 vorzugsweise so, dass der Taststift 22 mit der Drehrichtung des Messobjekts 30 gezogen wird. Vorzugsweise erfolgt die Antastung um etwa 45° in Drehrichtung versetzt, um Stick-Slip-Effekte zu vermeiden.

Wenngleich das neue Verfahren hier an einem bevorzugten Ausführungsbeispiel des neuen Koordinatenmessgerätes in Portalbauweise erläutert wurde, ist die Erfindung hierauf nicht beschränkt. Das Verfahren kann gleichermaßen bei Koordinatenmessgeräten mit anderen Gestellkonstruktionen angewendet werden, beispielsweise bei Koordinatenmessgeräten in Brückenbauweise oder in Horizontalarmbauweise. Des Weiteren kann das Verfahren auch vorteilhaft angewendet werden, um Hydrolager in dem Messkopf selbst während einer Formmessung zu deaktivieren. Darüber hinaus kann das neue Verfahren vorteilhaft verwendet werden, um etwa eine Ebenheitsmessung und/oder Welligkeitsmessung an einer Fläche eines Messobjekts durchzuführen, wie beispielsweise der oberen Planfläche des Messobjekts 30.

## Patentansprüche

1. Verfahren zum Bestimmen einer Formkontur. (43) an einem Messobjekt (30), mit den Schritten:
- Bereitstellen eines Koordinatenmessgerätes (10) mit einer Werkstückaufnahme, mit einem Messkopf (20) mit einem Messelement (22) und mit einem Gestell, an dem der Messkopf (20) angeordnet ist, wobei das Gestell ein erstes Gestellteil (14) aufweist, das relativ zu der Werkstückaufnahme entlang einer ersten Bewegungsachse (Y) bewegbar ist, wobei das Gestell ein zweites Gestellteil (16) aufweist, das relativ zu der Werkstückaufnahme entlang einer zweiten Bewegungsachse (X) bewegbar ist, und wobei das Gestell ein drittes Gestellteil (18) aufweist, das relativ zu der Werkstückaufnahme entlang einer dritten Bewegungsachse (Z) bewegbar ist, und wobei die Werkstückaufnahme einen Drehtisch (32) aufweist, der um eine weitere Achse (36) drehbar ist,
- Anordnen des Messobjekts (30) auf dem Drehtisch (32) und Positionieren des Messkopfes (20) mit dem Messelement (22) an einer definierten Position entlang der ersten, zweiten und dritten Bewegungsachse (Y, X, Z),
- Drehen des Drehtisches (32), während der Messkopf (20) mit Hilfe des Messelements (22) aktuelle Messwerte aufnimmt, die räumliche Positionen von Messpunkten an dem Messobjekt (30) relativ zu dem Messkopf (20) repräsentieren, und
- Bestimmen der Formkontur (43) in Abhängigkeit von den Messwerten,
**dadurch gekennzeichnet, dass** das Messelement (22) über zumindest ein Hydrolager, insbesondere ein Luftlager (48), gelagert ist, um eine Bewegung des Messelements (22) relativ zu der Werkstückaufnahme zu ermöglichen, und dass das zumindest eine Hydrolager (48) innerhalb eines automatisierten Messablaufs deaktiviert wird, nachdem der Messkopf (20) an der definierten Position positioniert wurde, so dass während der Aufnahme der aktuellen Messwerte das zumindest eine Hydrolager (48) deaktiviert ist.

2. Verfahren nach Anspruch 1, **dadurch gekennzeichnet, dass** die erste und die zweite Bewegungsachse (Y, X) eine Ebene (52) aufspannen, die senkrecht zu der weiteren Achse (36) liegt, wobei das erste Gestellteil (14) über zumindest ein erstes Hydrolager (48a) gelagert ist, wobei das zweite Gestellteil (16) über zumindest ein zweites Hydrolager (48b) gelagert ist, und wobei das zumindest eine erste und das zumindest eine zweite Hydrolager (48a, 48b) während der Aufnahme der Messwerte deaktiviert sind.

3. Verfahren nach Anspruch 1, **dadurch gekennzeichnet, dass** die erste und die zweite Bewegungsachse (X, Y) eine Ebene (52) aufspannen, die senkrecht zu der weiteren Achse (36) liegt, wobei das erste Gestellteil (14) über zumindest ein erstes Hydrolager (48a) gelagert ist, wobei das zweite Gestellteil (16) über zumindest ein zweites Hydrolager (48b) gelagert ist, und wobei das zumindest eine erste Hydrolager (48a) während der Aufnahme der Messwerte deaktiviert ist, während das zumindest eine zweite Hydrolager (48b) während der Aufnahme der Messwerte aktiviert bleibt.

4. Verfahren nach einem der Ansprüche 1 bis 3, **dadurch gekennzeichnet, dass** die dritte Bewegungsachse (Z) parallel zu der weiteren Achse (36) verläuft, wobei das dritte Gestellteil (18) über zumindest ein weiteres Hydrolager (48c) gelagert ist, und wobei das zumindest eine weitere Hydrolager (48c) während der Aufnahme der Messwerte deaktiviert ist.

5. Verfahren nach einem der Ansprüche 1 bis 3, **dadurch gekennzeichnet, dass** die dritte Bewegungsachse (Z) parallel zu der weiteren Achse (36) verläuft, wobei das dritte Gestellteil (18) über zumindest ein weiteres Hydrolager (48c) gelagert ist, und wobei das zumindest eine weitere Hydrolager (48c) während der Aufnahme der Messwerte aktiviert bleibt.

6. Verfahren nach einem der Ansprüche 1 bis 5, **dadurch gekennzeichnet, dass** das Koordinatenmessgerät (10) einen ersten Lageregler (74a) aufweist, der eine Position des Messkopfes (20) relativ zu der Werkstückaufnahme entlang der ersten Bewegungsachse (Y) regelt, wobei das Koordinatenmessgerät einen zweiten Lageregler (74b) aufweist, der eine Position des Messkopfes (20) relativ zu der Werkstückaufnahme entlang der zweiten Bewegungsachse (X) regelt, wobei das Koordinatenmessgerät (10) einen dritten Lageregler (74c) aufweist, der eine Position des Messkopfes (20) relativ zu der Werkstückaufnahme entlang der dritten Bewegungsachse (Z) regelt, und wobei der jeweilige Lageregler (74) für die erste, zweite und dritte Bewegungsachse (Y, X, Z) während der Aufnahme der aktuellen Messwerte deaktiviert ist, wenn ein zu derselben Bewegungsachse (Y, X, Z) gehörendes Hydrolager (48) deaktiviert ist.

7. Verfahren nach einem der Ansprüche 1 bis 6, **dadurch gekennzeichnet, dass** der Drehtisch (32) über zumindest ein Drehtisch-Hydrolager (34) gelagert ist, wobei das Drehtisch-Hydrolager (34) während der Aufnahme der aktuellen Messwerte aktiviert bleibt.

8. Verfahren nach einem der Ansprüche 1 bis 7, **dadurch gekennzeichnet, dass** der Messkopf (20) einen Taststift (22) zum Berühren des Messobjekts (30) und zumindest einen Messkraftgenerator (70) aufweist, der dazu ausgebildet ist, eine definierte Sollmesskraft auf den Taststift (22) auszuüben.

9. Verfahren nach einem der Ansprüche 1 bis 8, **dadurch gekennzeichnet, dass** der Messkopf (20) einen Arbeitsbereich (72) besitzt, der eine minimale Sollmesskraft und eine maximale Sollmesskraft definiert, wobei die Messwerte mit einer definierten Sollmesskraft aufgenommen werden, die mindestens 30 % der maximalen Sollmesskraft beträgt.

10. Verfahren nach einem der Ansprüche 1 bis 9, **dadurch gekennzeichnet, dass** vor dem Deaktivieren des zumindest einen Hydrolagers (48) erste Messwerte aufgenommen werden, die eine Position des Messobjekts (30) relativ zu den Bewegungsachsen (X, Y, Z) repräsentieren, wobei der Messkopf (20) in Abhängigkeit von den ersten Messwerten an der definierten Position positioniert wird.

11. Verfahren nach einem der Ansprüche 1 bis 10, **dadurch gekennzeichnet, dass** Kalibrierdaten (46) bereitgestellt werden, die eine Positionsänderung des Messkopfes (20) infolge der Deaktivierung des zumindest einen Hydrolagers (48) repräsentieren.

12. Verfahren nach einem der Ansprüche 1 bis 11, **dadurch gekennzeichnet, dass** zumindest ein mechanisches Klemmelement (54) bereitgestellt wird, mit dem das Messelement (22) nach dem Deaktivieren des zumindest einen Hydrolagers (48b) zusätzlich mechanisch geklemmt wird.

13. Koordinatenmessgerät zum Bestimmen einer Formkontur (43) an einem Messobjekt (30), mit einer Werkstückaufnahme, mit einem Messkopf (20) mit einem Messelement (22), mit einem Gestell, an dem der Messkopf (20) angeordnet ist, und mit einer Auswerte- und Steuereinheit (38), wobei das Gestell ein erstes Gestellteil (14) aufweist, das relativ zu der Werkstückaufnahme entlang einer ersten Bewegungsachse (Y) bewegbar ist, wobei das Gestell ein zweites Gestellteil (16) aufweist, das relativ zu der Werkstückaufnahme entlang einer zweiten Bewegungsachse (X) bewegbar ist, und wobei das Gestell ein drittes Gestellteil (18) aufweist, das relativ zu der Werkstückaufnahme entlang einer dritten Bewegungsachse (Z) bewegbar ist, wobei die Werkstückaufnahme einen Drehtisch (32) aufweist, der um eine weitere Achse (36) drehbar ist, wobei die Auswerte- und Steuereinheit (38) dazu ausgebildet ist, den Messkopf (20) an einer definierten Position entlang der ersten, zweiten und dritten Bewegungsachse (Y, X, Z) zu positionieren und den Drehtisch (32) zu drehen, während der Messkopf (20) mit Hilfe des Messelements (22) aktuelle Messwerte aufnimmt, die räumliche Positionen von Messpunkten an dem Messobjekt (30) relativ zu dem Messkopf (20) repräsentieren, und wobei die Auswerte- und Steuereinheit (38) ferner dazu ausgebildet ist, die Formkontur (43) in Abhängigkeit von den Messwerten zu bestimmen, **dadurch gekennzeichnet, dass** das Messelement (22) über zumindest ein Hydrolager, insbesondere ein Luftlager (48), gelagert ist, um eine Bewegung des Messelements (22) relativ zu der Werkstückaufnahme zu ermöglichen, und dass die Auswerte- und Steuereinheit (38) außerdem dazu ausgebildet ist, das zumindest eine Hydrolager (48) innerhalb eines automatisierten Messablaufs zu deaktivieren, nachdem der Messkopf (20) an der definierten Position positioniert wurde, so dass während der Aufnahme der aktuellen Messwerte das zumindest eine Hydrolager (48) deaktiviert ist.

## Claims

1. Method for determining a shape contour (43) on an object (30) to be measured, comprising the steps:
- providing a coordinate measuring device (10) having a workpiece holder, a measuring head (20) with a measuring element (22) and a frame, on which the measuring head (20) is arranged, where the frame has a first frame part (14), which can be moved relative to the workpiece holder along a first movement axis (Y), where the frame has a second frame part (16), which can be moved relative to the workpiece holder along a second movement axis (X), and where the frame has a third frame part (18), which can be moved relative to the workpiece holder along a third movement axis (Z), and where the workpiece holder has a rotary table (32), which can be rotated about a further axis (36),
- arranging the object (30) to be measured on the rotary table (32) and positioning the measuring head (20) with the measuring element (22) at a defined position along the first, second and third movement axes (Y, X, Z),
- rotating the rotary table (32) while the measuring head (20), with the aid of the measuring element (22), records current measured values which represent spatial positions of measuring points on the object (30) to be measured relative to the measuring head (20), and
- determining the shape contour (43) on the basis of the measured values,
**characterized in that** the measuring element (22) is mounted via at least one hydraulic bearing, in particular an air bearing (48), in order to permit a movement of the measuring element (22) relative to the workpiece holder, and **in that** the at least one hydraulic bearing (48) is deactivated within an automated measuring sequence, after the measuring head (20) has been positioned at the defined position, such that the at least one hydraulic bearing (48) is deactivated during the recording of the current measured values.

2. Method according to Claim 1, **characterized in that** the first and the second movement axes (X, Y) span a plane (52) which is located at right angles to the further axis (36), wherein the first frame part (14) is mounted via at least one first hydraulic bearing (48a), wherein the second frame part (16) is mounted via at least one second hydraulic bearing (48b), and wherein the at least one first and the at least one second hydraulic bearing (48a, 48b) are deactivated during the recording of the measured values.

3. Method according to Claim 1, **characterized in that** the first and the second movement axes (X, Y) span a plane (52) which is located at right angles to the further axis (36), wherein the first frame part (14) is mounted via at least one first hydraulic bearing (48a), wherein the second frame part (16) is mounted via at least one second hydraulic bearing (48b), and wherein the at least one first hydraulic bearing (48a) is deactivated during the recording of the measured values, while the at least one second hydraulic bearing (48b) remains activated during the recording of the measured values.

4. Method according to one of Claims 1 to 3, **characterized in that** the third movement axis (Z) extends parallel to the further axis (36), wherein the third frame part (18) is mounted via at least one further hydraulic bearing (48c), and wherein the at least one further hydraulic bearing (48c) is deactivated during the recording of the measured values.

5. Method according to one of Claims 1 to 3, **characterized in that** the third movement axis (Z) extends parallel to the further axis (36), wherein the third frame part (18) is mounted via at least one further hydraulic bearing (48c), and wherein the at least one further hydraulic bearing (48c) remains activated during the recording of the measured values.

6. Method according to one of Claims 1 to 5, **characterized in that** the coordinate measuring device (10) has a first position controller (74a), which controls a position of the measuring head (20) relative to the workpiece holder along the first movement axis (Y), wherein the coordinate measuring device has a second position controller (74b), which controls a position of the measuring head (20) relative to the workpiece holder along the second movement axis (X), wherein the coordinate measuring device (10) has a third position controller (74c), which controls a position of the measuring head (20) relative to the workpiece holder along the third movement axis (Z), and wherein the respective position controller (74) for the first, second and third movement axis (Y, X, Z) is deactivated during the recording of the current measured values when a hydraulic bearing (48) belonging to the same movement axis (Y, X, Z) is deactivated.

7. Method according to one of Claims 1 to 6, **characterized in that** the rotary table (32) is mounted via at least one rotary table hydraulic bearing (34), wherein the rotary table hydraulic bearing (34) remains activated during the recording of the current measured values.

8. Method according to one of Claims 1 to 7, **characterized in that** the measuring head (20) has a stylus (22) for touching the object (30) to be measured and at least one measuring force generator (70), which is configured so as to exert a defined intended measuring force on the stylus (22).

9. Method according to one of Claims 1 to 8, **characterized in that** the measuring head (20) has a working range (72) which defines a minimum intended measuring force and a maximum intended measuring force, wherein the measured values are recorded with a defined intended measuring force which amounts to at least 30% of the maximum intended measuring force.

10. Method according to one of Claims 1 to 9, **characterized in that** before the deactivation of the at least one hydraulic bearing (48), first measured values which represent a position of the object (30) to be measured relative to the movement axes (X, Y, Z) are recorded, wherein the measuring head (20) is positioned at the defined position on the basis of the first measured values.

11. Method according to one of Claims 1 to 10, **characterized in that** calibration data (46) which represents a position change of the measuring head (20) as a result of the deactivation of the at least one hydraulic bearing (48) is provided.

12. Method according to one of Claims 1 to 11, **characterized in that** at least one mechanical clamping element (54) is provided, with which the measuring element (22) is additionally clamped mechanically following the deactivation of the at least one hydraulic bearing (48b).

13. Coordinate measuring device for determining a shape contour (43) on an object (30) to be measured, having a workpiece holder, a measuring head (20) with a measuring element (22), a frame, on which the measuring head (20) is arranged, and an evaluation and control unit (38), where the frame has a first frame part (14), which can be moved relative to the workpiece holder along a first movement axis (Y), where the frame has a second frame part (16), which can be moved relative to the workpiece holder along a second movement axis (X), and where the frame has a third frame part (18), which can be moved relative to the workpiece holder along a third movement axis (Z), where the workpiece holder has a rotary table (32), which can be rotated about a further axis (36), where the evaluation and control unit (38) is configured so as to position the measuring head (20) at a defined position along the first, second and third movement axis (Y, X, Z) and to rotate the rotary table (32) while the measuring head (20), with the aid of the measuring element (22), records current measured values which represent spatial positions of measuring points on the object (30) to be measured relative to the measuring head (20), and where the evaluation and control unit (38) is further configured so as to determine the shape contour (43) on the basis of the measured values, **characterized in that** the measuring element (22) is mounted via at least one hydraulic bearing, in particular an air bearing (48), in order to permit a movement of the measuring element (22) relative to the workpiece holder, and **in that** the evaluation and control unit (38) is additionally configured so as to deactivate the at least one hydraulic bearing (48) within an automated measuring sequence, after the measuring head (20) has been positioned at the defined position, such that the at least one hydraulic bearing (48) is deactivated during the recording of the current measured values.

## Revendications

1. Procédé de détermination d'un profil de forme (43) sur un objet mesuré (30), comprenant les étapes suivantes :
- mise à disposition d'un appareil de mesure de coordonnées (10) comprenant un logement de pièce, comprenant une tête de mesure (20) pourvue d'un élément de mesure (22) et comprenant un bâti sur lequel est disposée la tête de mesure (20), le bâti possédant une première partie de bâti (14) qui peut être déplacée par rapport au logement de pièce le long d'un premier axe de déplacement (Y), le bâti possédant une deuxième partie de bâti (16) qui peut être déplacée par rapport au logement de pièce le long d'un deuxième axe de déplacement (X), et le bâti possédant une troisième partie de bâti (18) qui peut être déplacée par rapport au logement de pièce le long d'un troisième axe de déplacement (Z), et le logement de pièce possédant un plateau tournant (32) qui peut tourner autour d'un axe supplémentaire (36),
- disposition de l'objet mesuré (30) sur le plateau tournant (32) et positionnement de la tête de mesure (20) pourvue de l'élément de mesure (22) à une position définie le long du premier, du deuxième et du troisième axe de déplacement (Y, X, Z),
- rotation du plateau tournant (32) pendant que la tête de mesure (20) relève des valeurs mesurées actuelles à l'aide de l'élément de mesure (22), lesquelles représentent les positions dans l'espace de points de mesure sur l'objet mesuré (30) par rapport à la tête de mesure (20), et
- détermination du profil de forme (43) en fonction des valeurs mesurées,
**caractérisé en ce que** l'élément de mesure (22) est supporté par le biais d'au moins un palier hydraulique, notamment un palier pneumatique (48), afin de rendre possible un déplacement de l'élément de mesure (22) par rapport au logement de pièce, et **en ce que** l'au moins un palier hydraulique (48) est désactivé au sein d'une opération de mesure automatisée après que la tête de mesure (20) ait été positionnée à la position définie, de sorte que l'au moins un palier hydraulique (48) est désactivé pendant le relevé de la valeur mesurée actuelle.

2. Procédé selon la revendication 1, **caractérisé en ce que** le premier et le deuxième axe de déplacement (Y, X) couvrent un plan (52) qui est perpendiculaire à l'axe supplémentaire (36), la première partie de bâti (14) étant supportée par le biais d'au moins un premier palier hydraulique (48a), la deuxième partie de bâti (16) étant supportée par le biais d'au moins un deuxième palier hydraulique (48b), et l'au moins un premier et l'au moins un deuxième palier hydraulique (48a, 48b) étant désactivés pendant le relevé des valeurs mesurées.

3. Procédé selon la revendication 1, **caractérisé en ce que** le premier et le deuxième axe de déplacement (X, Y) couvrent un plan (52) qui est perpendiculaire à l'axe supplémentaire (36), la première partie de bâti (14) étant supportée par le biais d'au moins un premier palier hydraulique (48a), la deuxième partie de bâti (16) étant supportée par le biais d'au moins un deuxième palier hydraulique (48b), et l'au moins un premier palier hydraulique (48a) étant désactivé pendant le relevé des valeurs mesurées, alors que l'au moins un deuxième palier hydraulique (48b) reste activé pendant le relevé des valeurs mesurées.

4. Procédé selon l'une des revendications 1 à 3, **caractérisé en ce que** le troisième axe de déplacement (Z) s'étend parallèlement à l'axe supplémentaire (36), la troisième partie de bâti (18) étant supportée par le biais d'au moins un palier hydraulique supplémentaire (48c), et l'au moins un palier hydraulique supplémentaire (48c) étant désactivé pendant le relevé des valeurs mesurées.

5. Procédé selon l'une des revendications 1 à 3, **caractérisé en ce que** le troisième axe de déplacement (Z) s'étend parallèlement à l'axe supplémentaire (36), la troisième partie de bâti (18) étant supportée par le biais d'au moins un palier hydraulique supplémentaire (48c), et l'au moins un palier hydraulique supplémentaire (48c) restant activé pendant le relevé des valeurs mesurées.

6. Procédé selon l'une des revendications 1 à 5, **caractérisé en ce que** l'appareil de mesure de coordonnées (10) possède un premier régulateur de position (74a), lequel régule une position de la tête de mesure (20) par rapport au logement de pièce le long du premier axe de déplacement (Y), l'appareil de mesure de coordonnées possédant un deuxième régulateur de position (74b), lequel régule une position de la tête de mesure (20) par rapport au logement de pièce le long du deuxième axe de déplacement (X), l'appareil de mesure de coordonnées (10) possédant un troisième régulateur de position (74c), lequel régule une position de la tête de mesure (20) par rapport au logement de pièce le long du troisième axe de déplacement (Z), et le régulateur de position (74) respectif pour le premier, le deuxième et le troisième axe de déplacement (Y, X, Z) étant désactivé pendant le relevé des valeurs mesurées actuelles lorsqu'un palier hydraulique (48) appartenant au même axe de déplacement (Y, X, Z) est désactivé.

7. Procédé selon l'une des revendications 1 à 6, **caractérisé en ce que** le plateau tournant (32) est supporté par le biais d'au moins un palier hydraulique de plateau tournant (34), le palier hydraulique de plateau tournant (34) restant activé pendant le relevé des valeurs mesurées actuelles.

8. Procédé selon l'une des revendications 1 à 7, **caractérisé en ce que** la tête de mesure (20) possède une broche de palpage (22) destinée à entrer en contact avec l'objet mesuré (30) et au moins un générateur de force de mesure (70), lequel est configuré pour exercer une force de mesure de consigne définie sur la broche de palpage (22).

9. Procédé selon l'une des revendications 1 à 8, **caractérisé en ce que** la tête de mesure (20) possède une zone de travail (72) qui définit une force de mesure de consigne minimale et une force de mesure de consigne maximale, les valeurs mesurées étant relevées avec une force de mesure de consigne définie qui est égale à au moins 30 % de la force de mesure de consigne maximale.

10. Procédé selon l'une des revendications 1 à 9, **caractérisé en ce qu'**avant la désactivation de l'au moins un palier hydraulique (48), des premières valeurs mesurées sont relevées, lesquelles représentent une position de l'objet mesuré (30) par rapport aux axes de déplacement (X, Y, Z), la tête de mesure (20) étant positionnée à la position définie en fonction des premières valeurs mesurées.

11. Procédé selon l'une des revendications 1 à 10, **caractérisé en ce que** des données d'étalonnage (46) sont fournies, lesquelles représentent un changement de position de la tête de mesure (20) résultant de la désactivation de l'au moins un palier hydraulique (48).

12. Procédé selon l'une des revendications 1 à 11, **caractérisé en ce qu'**au moins un élément de serrage mécanique (54) est mis à disposition, avec lequel l'élément de mesure (22) est en plus serré mécaniquement après la désactivation de l'au moins un palier hydraulique (48b).

13. Appareil de mesure de coordonnées destiné à déterminer un profil de forme (43) sur un objet mesuré (30), comprenant un logement de pièce, comprenant une tête de mesure (20) pourvue d'un élément de mesure (22), comprenant un bâti sur lequel est disposée la tête de mesure (20), et comprenant une unité d'interprétation et de commande (38), le bâti possédant une première partie de bâti (14) qui peut être déplacée par rapport au logement de pièce le long d'un premier axe de déplacement (Y), le bâti possédant une deuxième partie de bâti (16) qui peut être déplacée par rapport au logement de pièce le long d'un deuxième axe de déplacement (X), et le bâti possédant une troisième partie de bâti (18) qui peut être déplacée par rapport au logement de pièce le long d'un troisième axe de déplacement (Z), le logement de pièce possédant un plateau tournant (32) qui peut tourner autour d'un axe supplémentaire (36), l'unité d'interprétation et de commande (38) étant configurée pour positionner la tête de mesure (20) à une position définie le long du premier, du deuxième et du troisième axe de déplacement (Y, X, Z) et pour faire tourner le plateau tournant (32) pendant que la tête de mesure (20) relève des valeurs mesurées actuelles à l'aide de l'élément de mesure (22), lesquelles représentent les positions dans l'espace de points de mesure sur l'objet mesuré (30) par rapport à la tête de mesure (20), et l'unité d'interprétation et de commande (38) étant en outre configurée pour déterminer le profil de forme (43) en fonction des valeurs mesurées, **caractérisé en ce que** l'élément de mesure (22) est supporté par le biais d'au moins un palier hydraulique, notamment un palier pneumatique (48), afin de rendre possible un déplacement de l'élément de mesure (22) par rapport au logement de pièce, et **en ce que** l'unité d'interprétation et de commande (38) est en outre configurée pour désactiver l'au moins un palier hydraulique (48) au sein d'une opération de mesure automatisée après que la tête de mesure (20) ait été positionnée à la position définie, de sorte que l'au moins un palier hydraulique (48) est désactivé pendant le relevé de la valeur mesurée actuelle.
